(19) Europäisches Patentamt
European Patent Office
Office européen des brevets

(11) **EP 4 625 039 A1**

(12) **EUROPEAN PATENT APPLICATION**

(43) Date of publication:
**01.10.2025 Bulletin 2025/40**

(21) Application number: 25162199.1

(22) Date of filing: **06.03.2025**

(51) International Patent Classification (IPC):
*G03B 21/53* (2006.01)    *G03B 3/10* (2021.01)
*G03B 21/14* (2006.01)    *G02B 7/28* (2021.01)
*H04N 9/31* (2006.01)

(52) Cooperative Patent Classification (CPC):
**G03B 21/53; G02B 7/282; G03B 3/10;
G03B 21/142; H04N 9/317; H04N 9/3194;**
G03B 2205/0046; H04N 9/3185

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2024 US 202463570829 P
21.06.2024 CN 202410813663**

(71) Applicant: **Coretronic Corporation
Hsin-Chu 300 (TW)**

(72) Inventors:
• LIAO, Yi-Jun
  **300 Hsin-Chu (TW)**
• CHEN, Kun-Hong
  **300 Hsin-Chu (TW)**
• HSIEH, Yu-Hsuan
  **300 Hsin-Chu (TW)**
• CHEN, Yun-Shih
  **300 Hsin-Chu (TW)**

(74) Representative: **Ter Meer Steinmeister & Partner
Patentanwälte mbB
Nymphenburger Straße 4
80335 München (DE)**

(54) **PROJECTION DEVICE AND PROJECTION CORRECTION METHOD**

(57)     A projection device and a projection correction method are provided. The projection device includes a projection module, a zoom projection lens, a sensor, a focus adjustment module, a zoom-ratio adjustment module, a detection module and a control unit. The zoom-ratio adjustment module adjusts a position of a lens group in the zoom projection lens to adjust a zoom ratio of a projection image generated by the zoom projection lens projecting an image beam generated by the projection module. The control unit uses an autofocus transfer function to calculate a focus adjustment parameter based on a corresponding detection value generated by the detection module detecting displacement of the lens group and a projection distance sensed by the sensor, and controls the focus adjustment module according to the focus adjustment parameter to adjust an imaging focal length of the zoom projection lens.

FIG. 1

EP 4 625 039 A1

## Description

This application claims priority of U.S. Provisional Patent Application Ser. No. 63/570,829, filed on March 28, 2024, and China Patent Application No. 2024108136639, filed on June 21, 2024.

Technical Field

The present invention relates to a projection device and a projection correction method, in particular to a projection device and a projection correction method using a zoom projection lens.

Related Art

The autofocus capability of the existing projection device is usually implemented by the following two methods. The first method is to use multi-point correction with multiple distances and create a lookup table of focus adjustment parameters to adjust the positions of depth of field at different distances. Another method is to uses the autofocus capability of the autofocus transfer function, which uses single-point correction with a fixed distance and performs calculation to obtain the function curve of depth of field and distance. However, the above two autofocus methods of the projection device may only be applied to the projection device having a lens with a fixed throw ratio (i.e., a lens with a fixed distance corresponding to a fixed position of depth of field), and may not be applied to the projection device having a lens with an adjustable zoom ratio (i.e., a zoom projection lens).

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

SUMMARY

The present invention provides a projection device and a projection correction method to solve the problem that the existing autofocus capability may not be applied to a projection device having a lens with an adjustable zoom ratio (i.e., a zoom projection lens).

Other objects and advantages of the present invention may be further understood from the technical features disclosed in the present invention.

The object is solved by the features of the independent claim. Preferred embodiments are given in the dependent claims.

In order to achieve one or part or all of the above objectives or other objectives, an embodiment of the present invention provides a projection device, which includes a projection module, a zoom projection lens, a sensor, and a focus adjustment module, a zoom-ratio adjustment module, a detection module and a control unit. The projection module is configured to generate an image beam. The zoom projection lens is disposed on a transmission path of the image beam, and is configured to project the image beam generated by the projection module to a projection surface to generate a projection image. The sensor is configured to sense a projection distance between the projection device and the projection surface. The focus adjustment module is connected to the zoom projection lens and is configured to rotate the zoom projection lens to adjust an imaging focal length of the zoom projection lens. The zoom-ratio adjustment module is connected to the zoom projection lens and is configured to adjust a position of a lens group in the zoom projection lens to adjust a zoom ratio of the projection image. The detection module is connected to the zoom projection lens, and is configured to generate a corresponding detection value according to a displacement variation of the lens group. The control unit is connected to the detection module, the sensor and the focus adjustment module, and is configured to use an autofocus transfer function to calculate a focus adjustment parameter based on the corresponding detection value and the projection distance, and control the focus adjustment module to adjust the imaging focal length of the zoom projection lens according to the focus adjustment parameter, to perform automatic focusing.

In order to achieve one or part of or all of the above objectives or other objectives, an embodiment of the present invention provides a projection correction method, which is suitable for a projection device including a projection module, a zoom projection lens, a sensor, a focus adjustment module, a zoom-ratio adjustment module and a detection module, wherein the zoom-ratio adjustment module and the detection module are connected to the zoom projection lens. The projection correction method includes the following steps: generating an image beam by the projection module, and projecting the image beam to a projection surface by the zoom projection lens to generate a projection image; receiving a projection distance between the projection device and the projection surface sensed by the sensor and a corresponding detection value generated from the detection module based on the zoom-ratio adjustment module adjusting a position of a lens group in the zoom projection lens; and using an autofocus transfer function to calculate a focus adjustment parameter based on the corresponding detected value and the projection distance, and controlling the focus adjustment module to adjust an imaging focal length of the zoom projection lens according to the focus adjustment parameter, to perform automatic focusing.

In one or more embodiments, the autofocus transfer function may be $FP = Z_{wc} \times G_{st} +$

$$d_{fp} + a \prod_{k=1}^{g(Dist)} (1 + Lc_1 Lc_2{}^{k-1})$$, $FP$ is the focus adjustment parameter, $Z_{wc}$ is a zoom-ratio parameter of the zoom projection lens, the zoom-ratio parameter is related to the corresponding detection value, $G_{st}$ is a parameter indicating a total number of steps of a motor stroke of the focus adjustment module, $d_{fp}$ is a focus deviation of the projection device, $a$ is a minimum imaging object distance of the zoom projection lens, $g(Dist)$ is a projection distance transfer parameter, and $Lc_1$ and $Lc_2$ are lens parameters of the zoom projection lens and are respectively related to a curvature of an incident surface and a curvature of an exit surface of the zoom projection lens.

In one or more embodiments, when the projection device is set at a minimum projection distance, the control unit may be configured to: set the projection distance sensed by the sensor as the minimum projection distance; set the zoom-ratio adjustment module at a tele-end of a zoom range of the zoom projection lens, and obtain a first detection value by the detection module and obtain a first focus adjustment parameter by the focus adjustment module after receiving a first signal that the projection image is clear; set the zoom-ratio adjustment module at a wide-end of the zoom range of the zoom projection lens, and obtain a second detection value by the detection module and obtain a second focus adjustment parameter by the focus adjustment module after receiving a second signal that the projection image is clear; and calculate the focus deviation according to the first focus adjustment parameter and the second focus adjustment parameter.

In one or more embodiments, the zoom-ratio parameter of the zoom projection lens may be obtained by the following formula: $$Z_{wc} = \frac{Zoom_{current} - Zoom_{min}}{Zoom_{max} - Zoom_{min}}$$, $Zoom_{current}$ is a current detection value, $Zoom_{min}$ is the first detection value, and $Zoom_{max}$ is the second detection value.

In one or more embodiments, the projection distance transfer parameter may be obtained by the following

formula: $$g(Dist) = \frac{Dist - Dist_{min}}{Dist_{interval}}$$, $Dist$ is the projection distance, $Dist_{min}$ is a minimum projection distance of the projection device, and $Dist_{interval}$ is a calculation precision parameter of the focus adjustment module.

In one or more embodiments, when the projection image is not clear after the control unit controls the focus adjustment module to perform autofocusing, the control unit may be further configured to: make the projection module project a correction image, and control the focus adjustment module to adjust the imaging focal length according to a focus adjustment command, to adjust clarity of the correction image; receive a correction completion signal that the correction image is clear, and obtain a new focus adjustment parameter; and calculate a new focus deviation based on the new focus adjustment parameter; and to update the autofocus transfer function based on the new focus deviation.

In one or more embodiments, the sensor may be further configured to sense a projection angle between the projection device and the projection surface; and the control unit is configured to use a keystone correction algorithm to calculate coordinates of four corner points of a new projection image based on the projection angle, a current throw ratio and an image vertical distance ratio of the projection device, and perform keystone correction on the projection image based on the coordinates of the four corner points; the current throw ratio is obtained by the following formula:

$$TR_{current} = \frac{TR_{Tele}}{(1 + R \times Z_{wc})}$$, $TR_{current}$ is the current throw ratio, $TR_{Tele}$ is a throw ratio of a tele-end of a zoom range of the zoom projection lens, R is a ratio difference between the tele-end of the zoom range and a wide-end of the zoom range of the zoom projection lens, and $Z_{wc}$ is a zoom-ratio parameter of the zoom projection lens, which is related to the corresponding detection value.

In one or more embodiments, when the control unit determines that a change in the corresponding detection value exceeds a preset threshold, the control unit may be configured to use the autofocus transfer function to calculate a new focus adjustment parameter based on a current detection value and a current projection distance.

In one or more embodiments, the sensor may comprise at least one of a laser sensing unit, an infrared sensing unit and an ultrasonic sensing unit.

In one or more embodiments, the detection module may comprise a control rod and a detection assembly.

In one or more embodiments, the detection assembly may be connected to the control rod.

In one or more embodiments, the zoom-ratio adjustment module may comprise a zoom adjustment ring.

In one or more embodiments, the control rod may be inserted into an opening of the zoom adjustment ring

In one or more embodiments, when the zoom-ratio adjustment module adjusts the zoom ratio, the zoom adjustment ring may rotate to drive the control rod to generate displacement.

In one or more embodiments, and the detection assembly may be configured to detect a change in an electrical signal value according to the displacement of the control rod, and generate the corresponding detection value.

In one or more embodiments, an extension direction of the control rod may be substantially parallel to an optical axis of the zoom projection lens.

In one or more embodiments, a size of the opening of the zoom adjustment ring may be greater than a size of the control rod.

In one or more embodiments, the projection correction method may further comprise the following steps: setting the projection distance sensed by the sensor as a minimum projection distance when the projection device is set at the minimum projection distance; setting the zoom-ratio adjustment module at a tele-end of a zoom range of the zoom projection lens, and obtaining a first detection value by the detection module and obtaining a first focus adjustment parameter by the focus adjustment module after receiving a first signal that the projection image is clear; setting the zoom-ratio adjustment module at a wide-end of the zoom range of the zoom projection lens, and obtaining a second detection value by the detection module and obtaining a second focus adjustment parameter by the focus adjustment module after receiving a second signal that the projection image is clear; and calculating the focus deviation according to the first focus adjustment parameter and the second focus adjustment parameter.

In one or more embodiments, the projection correction method may further comprise the following steps: making the projection module project a correction image and controlling the focus adjustment module to adjust the imaging focal length according to a focus adjustment command, to adjust clarity of the correction image when the projection image is not clear after the focus adjustment module is controlled to perform automatic focusing; receiving a correction completion signal that the correction image is clear, and obtaining a new focus adjustment parameter; calculating a new focus deviation based on the new focus adjustment parameter; and updating the autofocus transfer function based on the new focus deviation.

In one or more embodiments, the projection correction method may further comprise the following steps: using a keystone correction algorithm to calculate coordinates of four corner points of a new projection image based on a projection angle between the projection device and the projection surface sensed by the sensor, a current throw ratio and an image vertical distance ratio of the projection device, and performing keystone correction on the projection image based on the coordinates of the four corner points.

In one or more embodiments, the current throw ratio may be obtained by the following formula:

$$TR_{current} = \frac{TR_{Tele}}{(1 + R \times Z_{wc})}$$, $TR_{current}$ is the current throw ratio, $TR_{Tele}$ is a throw ratio of a tele-end of a zoom range of the zoom projection lens, R is a ratio difference between the tele-end of the zoom range and a wide-end of the zoom range of the zoom projection lens, and $Z_{wc}$ is a zoom-ratio parameter of the zoom projection lens, which is related to the corresponding detection value.

In one or more embodiments, the projection correction method may, further comprise the following step: using the autofocus transfer function to calculate a new focus adjustment parameter based on a current detection value and a current projection distance when a change in the corresponding detection value exceeds a preset threshold.

Based on the above, in the projection device and the projection correction method according to the embodiments of the present invention, the focus adjustment parameter is calculated using the autofocus transfer function according to the projection distance between the projection device and the projection surface and the corresponding detection value generated by adjusting the position of the lens group in the zoom projection lens, and then the focus adjustment parameter is used to adjust the imaging focal length of the zoom projection lens for automatic focusing. Therefore, the projection device and the projection correction method of the embodiments of the present invention may realize the automatic focusing capability of the zoom projection lens in a scene with any zoom ratio within the effective projection distance.

Other objectives, features and advantages of the present invention will be further understood from the further technological features disclosed by the embodiments of the present invention wherein there are shown and described preferred embodiments of this invention, simply by way of illustration of modes best suited to carry out the invention.

BRIEF DESCRIPTION OF THE DRAWINGS

FIG. 1 is a block diagram of a projection device of an embodiment of the invention;
FIG. 2 is a flow chart of a projection correction method of an embodiment of the invention;
FIG. 3 is a three-dimensional diagram of a projection device of an embodiment of the invention;
FIG. 4 is a first perspective view of the detection module and the zoom-ratio adjustment module of the projection device in FIG. 3;
FIG. 5 is a second perspective view of the detection module and the zoom-ratio adjustment module of the projection device in FIG. 3;

FIG. 6 is a third perspective view of the detection module and the zoom-ratio adjustment module of the projection device in FIG. 3;
FIG. 7 is a flow chart of a projection correction method according to another embodiment of the present invention;
FIG. 8 is a flow chart for establishing the autofocus transfer function in FIG. 2 and FIG. 7;
FIG. 9 is a flow chart of a projection correction method according to still another embodiment of the present invention;
FIG. 10 is a graph of the default autofocus transfer function and the corrected autofocus transfer function;
FIG. 11 flow chart of a projection correction method of yet another embodiment of the invention;
FIG. 12 is a top view of the projection image projected by the projection device of a embodiment;
FIG. 13 is a side view of a projection image projected by the projection device of a embodiment.

DETAILED DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top", "bottom", "front", "back", etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiment may be utilized and structural changes may be made without departing from the scope of the appended claims. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

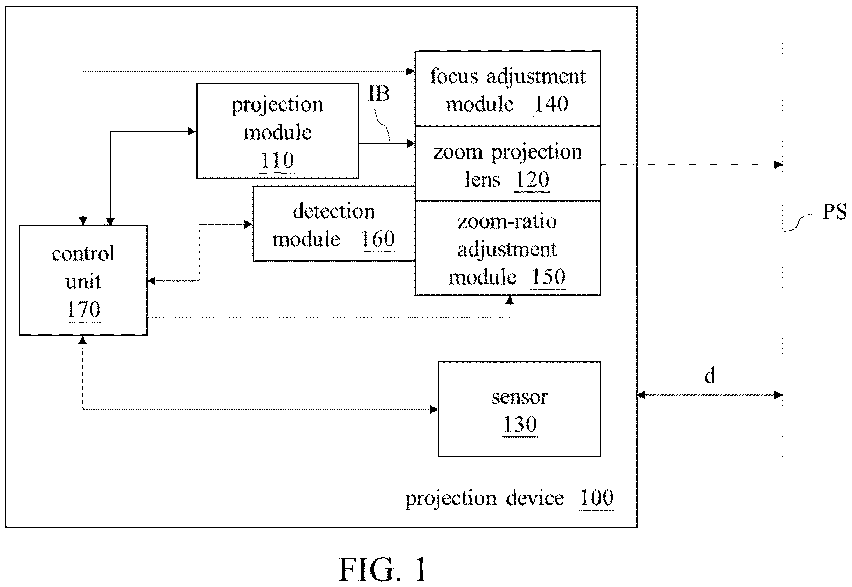

Please refer to FIG. 1, which is a block diagram of a projection device according to an embodiment of the present invention. As shown in FIG. 1, a projection device (projector) 100 includes a projection module 110, a zoom projection lens 120, a sensor 130, a focus adjustment module 140, a zoom-ratio adjustment module 150, a detection module 160 and a control unit 170.

In this embodiment, the projection module 110 is configured to generate an image beam IB. The projection module 110 may include, but is not limited to, a light source module (not shown) and a light valve (not shown). The light source module may be configured to provide an illumination beam (not shown), and may be formed by at least one of the optical elements such as a light source, a wavelength conversion element, a light homogenizing element, a filter element, and a light guide element. The light source is configured to provide light beams with different wavelengths as the source of the illumination beam, and may be a light emitting diode (LED), a laser diode (LD) or a combination thereof. The light valve is disposed on a transmission path of the illumination beam and is configured to convert the illumination beam into the image beam IB. The light valve may be, but is not limited to, a reflective optical modulator, such as a liquid crystal on silicon panel (LCoS panel), and a digital micro-mirror device (DMD), or a transmissive optical modulator, such as a transparent liquid crystal panel, an electro-optical modulator, a magneto-optic modulator, and an acousto-optic modulator (AOM). However, this embodiment does not limit the category and type of the light valve.

In this embodiment, the zoom projection lens 120 is disposed on the transmission path of the image beam IB, and is configured to project the image beam IB generated by the projection module 110 to a projection surface PS to generate a projection image. The zoom projection lens 120 has an adjustable imaging focal length and an adjustable zoom ratio. The zoom projection lens 120 may include, but is not limited to, a combination of a plurality of optical lenses with refractive power. The optical lenses may include, but are not limited to, various combinations of non-planar lenses such as biconcave lenses, biconvex lenses, concave-convex lenses, convex-concave lenses, plano-convex lenses, and plano-concave lenses, and the plurality of optical lenses may be divided into one or more lens groups. The projection surface PS may be, but is not limited to, a screen, a curtain, a wall or a surface of other imageable objects. In one embodiment, the zoom projection lens 120 may further include a plane optical lens, such as a reflective mirror, to reflect the image beam IB from the light valve onto the projection surface PS.

In this embodiment, the sensor 130 is configured to sense a projection distance d between the projection device 100 and the projection surface PS. The sensor 130 may include, but is not limited to, at least one of a laser ranging unit (laser distance sensor), an infrared ranging unit (infrared distance sensor), and an ultrasonic ranging unit (ultrasonic distance sensor), and the sensor 130 may also be used in conjunction with at least one of a camera and a gravity/-acceleration sensor. In one embodiment, the sensor 130 may be further configured to sense a projection angle between the projection device 100 and the projection surface PS. In another embodiment, a gravity/acceleration sensor is coupled to the sensor 130, and the gravity/acceleration sensor is configured to detect whether the projection device 100 is moved. When the gravity/acceleration sensor detects that the projection device 100 is moved, the sensor 130 is triggered to sense the projection distance d.

In this embodiment, the focus adjustment module 140 is connected to the zoom projection lens 120 and the control unit 170, and the focus adjustment module 140 is configured to rotate the zoom projection lens 120 to adjust an imaging focal length of the zoom projection lens 120. The focus adjustment module 140 may include a first driving device, such as a stepper motor, and a first adjustment assembly, such as a focus adjustment ring, and the first adjustment component is provided on the zoom projection lens 120. The imaging focal length of the zoom projection lens 120 may be adjusted by driving the first adjustment assembly to rotate via the first driving device.

In this embodiment, the zoom-ratio adjustment module 150 is connected to the zoom projection lens 120, and the zoom-ratio adjustment module 150 is configured to adjust a position of a lens group in the zoom projection lens 120 to adjust a zoom ratio of the projection image. The detection module 160 is connected to the zoom projection lens 120 and is configured to generate a corresponding detection value according to a displacement variation of the lens group.

In this embodiment, the control unit 170 is connected to the detection module 160, the sensor 130 and the focus adjustment module 140, and the control unit 170 is configured to use an autofocus transfer function to calculate a focus adjustment parameter based on the corresponding detection value and the projection distance d, and control the focus adjustment module 140 to adjust the imaging focal length of the zoom projection lens 120 according to the focus adjustment parameter to perform automatic focusing. The control unit 170 may include, but is not limited to, a microprocessor, a microcontroller unit (MCU), a central processing unit (CPU), a digital signal processor (DSP), a programmable controller, an application specific integrated circuit (ASIC), a programmable logic device (PLD), other similar devices, or a combination thereof. In an embodiment, the control unit 170 may include a plurality of processors. In one embodiment, the control unit 170 may convert the corresponding detection value (e.g., a variable resistance) of the detection module 160 through an analog-to-digital converter (ADC) to obtain a detection result.

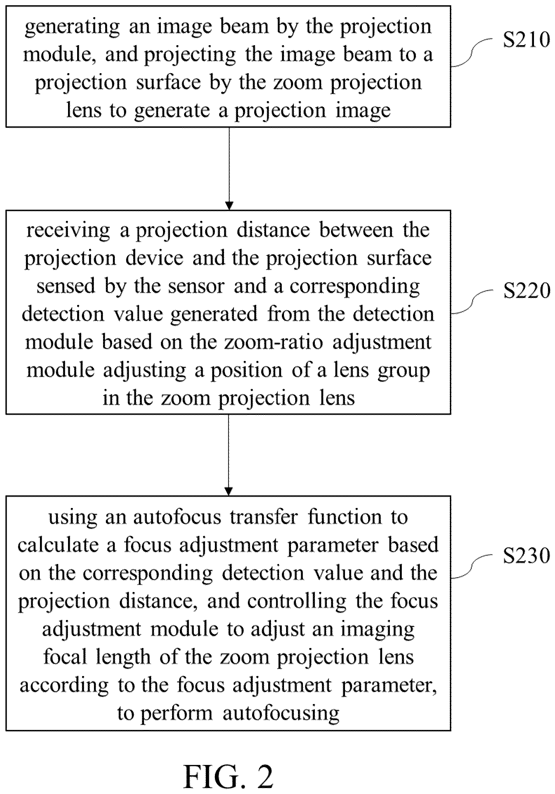

Please refer to FIG. 1 and FIG. 2. FIG. 2 is a flow chart of a projection correction method according to an embodiment of the present invention. The projection correction method of FIG. 2 may be applied to at least the projection device 100 of FIG. 1, and the details of each step in FIG. 2 are illustrated below with the components shown in FIG. 1. As shown in FIG. 2, the projection correction method includes the following steps: generating an image beam IB by the projection module 110, and projecting the image beam IB to a projection surface PS by the zoom projection lens 120 to generate a projection image (step S210); receiving a projection distance d between the projection device 100 and the projection surface PS sensed by the sensor 130 and a corresponding detection value generated from the detection module 160 based on the zoom-ratio adjustment module 150 adjusting a position of a lens group in the zoom projection lens 120 (step S220); and using an autofocus transfer function to calculate a focus adjustment parameter based on the corresponding detection value and the projection distance d, and controlling the focus adjustment module 140 to adjust an imaging focal length of the zoom projection lens 120 according to the focus adjustment parameter, to perform autofocusing (step S230), wherein step S220 and step S230 are executed by the control unit 170. The control unit 170 has the functions of calculating, judging and controlling the focus adjustment module 140, and may regularly capture the corresponding detection value (i.e., the electrical signal value) of the detection module 160 and the projection distance d of the sensor 130.

In step S220, the sensor 130 may sense the projection distance d based on the time of flight (ToF) technology (that is, the sensor 130 may be a time of flight ranging sensor), and the time-of-flight ranging sensor may use laser light signals, infrared signals or ultrasonic signals for distance sensing.

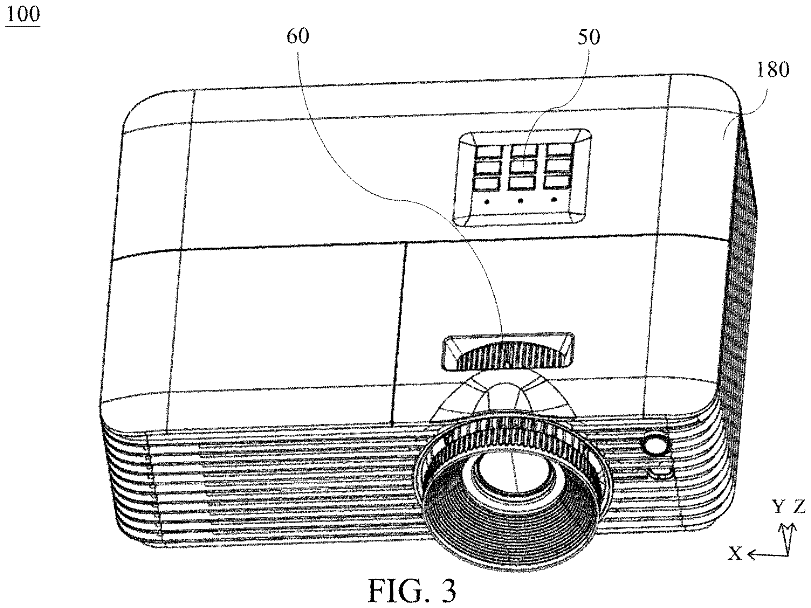

In this embodiment, the position of the lens group in the zoom projection lens 120 may be adjusted manually or electrically through the zoom-ratio adjustment module 150 to adjust the zoom ratio of the projection image. The zoom-ratio adjustment module 150 may adjust the position of one or more lens groups in the zoom projection lens 120. In one embodiment, the zoom-ratio adjustment module 150 may include a second driving device, such as a stepper motor, and a second adjustment assembly, such as a gear, a screw, or other device that may drive the mechanism to operate. The user may use a remote control or a keypad 50 exposed from the upper cover 180 of the projection device 100 (as shown in FIG. 3, which is a three-dimensional diagram of a projection device according to an embodiment of the present invention) to generate a control signal to the zoom-ratio adjustment module 150, to control the second driving device to drive the second adjustment assembly to change the position of the lens group in the zoom projection lens 120 to adjust the zoom ratio of the projection image. In another embodiment, the zoom-ratio adjustment module 150 may be a manually operable component (e.g., a zoom adjustment ring 60, as shown in FIG. 3). The user may directly manually rotate the zoom adjustment ring 60 relative to the zoom projection lens 120, thereby causing the position of the lens group in the zoom projection lens 120 to change to adjust the zoom ratio of the projection image. For example, the zoom adjustment ring 60 may be clamped on the zoom projection lens 120.

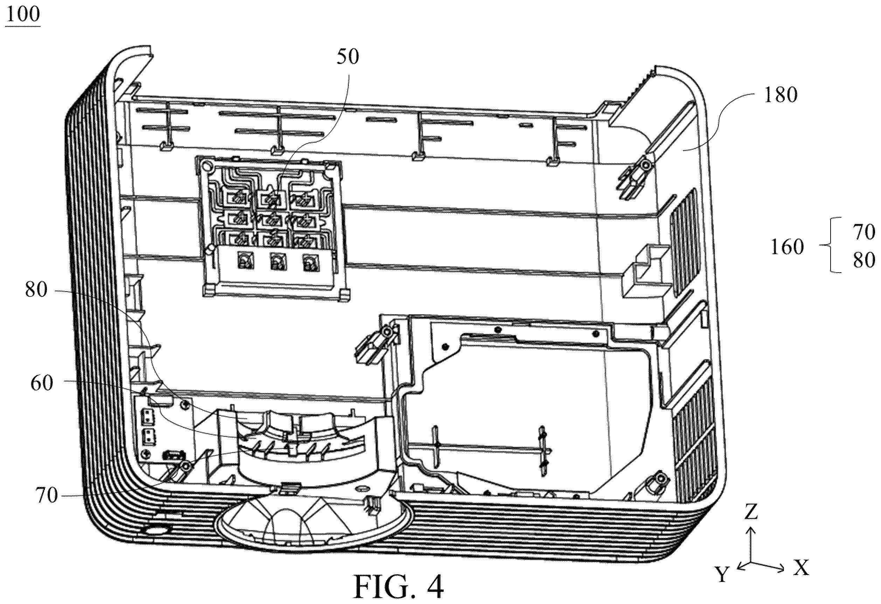

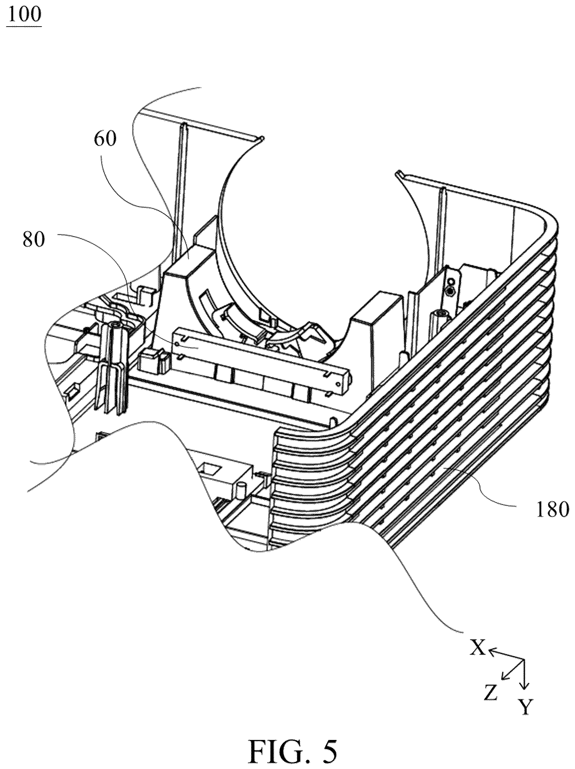

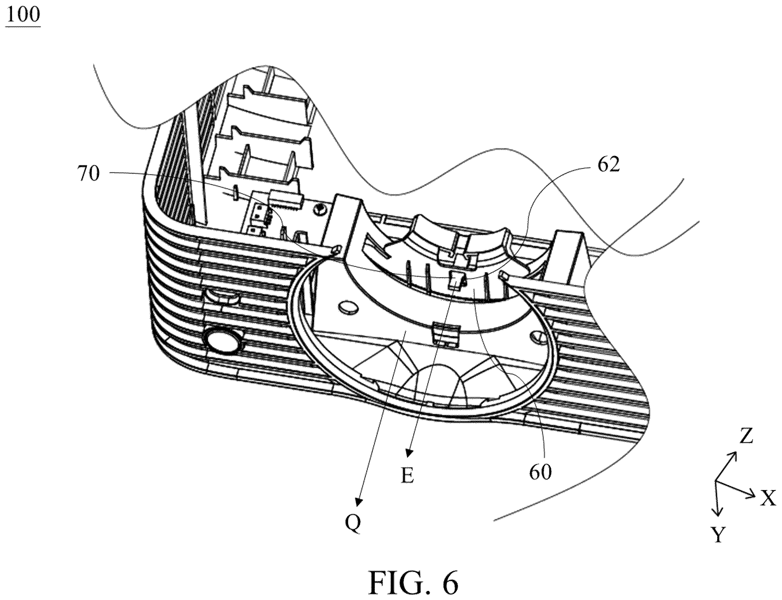

The detection module 160 is configured to generate a corresponding detection value according to the displacement variation of the lens group driven by the zoom-ratio adjustment module 150, wherein the corresponding detection value may be an electrical signal value. The detection module 160 starts detecting after the projection device 100 is turned on. In this embodiment, please refer to FIG. 4 to FIG. 6, wherein FIG. 4 is a first perspective view of the detection module and the zoom-ratio adjustment module of the projection device in FIG. 3, FIG. 5 is a second perspective view of the detection module and the zoom-ratio adjustment module of the projection device in FIG. 3, and FIG. 6 is a third perspective view of the detection module and the zoom-ratio adjustment module of the projection device in FIG. 3. The detection module 160 includes a control rod 70 and a detection assembly 80, and the detection assembly 80 is connected to the control rod 70. The zoom-ratio adjustment module 150 includes a zoom adjustment ring 60. The control rod 70 is inserted into an opening 62 of the zoom adjustment ring 60, or the control rod 70 is inserted into an opening of the adapter (not shown) of the zoom projection lens 120. When the zoom-ratio adjustment module 150 adjusts the zoom ratio of the projection image, the zoom adjustment ring 60 rotates, thereby driving the control rod 70 to move, so that the detection assembly 80 obtains the change of the electrical signal value according to the displacement of the control rod 70 and generates a corresponding detection value. The detection assembly 80 may be, for example, a sliding resistor. For example, the sliding resistor may be a linear variable resistor with a maximum resistance value of 10 kΩ. When the control rod 70 is displaced, the control rod 70 slides from one end to the other end, the movement distance of the control rod 70 is, for example, the length of the opening 62 of the zoom adjustment ring 60 or the opening of the adapter of the zoom projection lens 120, the resistance value of the sliding resistor changes, causing the detection module 160 to output a voltage corresponding thereto (i.e., the corresponding detection value).

In this embodiment, since the control rod 70 moves laterally relative to the sliding resistor, and the zoom adjustment ring 60 rotationally moves around the center of the zoom projection lens 120, the size of the opening 62 of the zoom adjustment ring 60 or the opening of the adapter of the zoom projection lens 120 needs to be greater than the size of the control rod 70, so that the control rod 70 has a margin for movement in the opening 62. Therefore, when the zoom adjustment ring 60 is rotated to adjust the zoom ratio of the projection image, the zoom adjustment ring 60 drives the control rod 70 to move relative to the sliding resistor. An extension direction E of the control rod 70 is substantially parallel to an optical axis of the zoom projection lens 120, and the optical axis of the zoom projection lens 120 corresponds to a light emitting direction Q of the zoom projection lens 120.

In one embodiment, the detection module 160 may include a gear structure (for example, a gear, not drawn) and a rotary encoder (not drawn), and the zoom-ratio adjustment module 150 may include a zoom adjustment ring 60. As the zoom adjustment ring 60 rotates, the gear structure is driven to rotate, and the lens group in the zoom projection lens 120 is displaced. The rotation of the gear structure drives the rotary encoder to generate a corresponding detection value. Therefore, the gear structure combined with the rotary encoder may make the detection module 160 generate a hexadecimal digitally encoded detection value. In another embodiment, the detection module 160 may include a gear structure (not drawn) and a Hall element (not drawn), and the zoom-ratio adjustment module 150 may include a zoom adjustment ring 60. As the zoom adjustment ring 60 rotates, the gear structure is driven to rotate, and the lens group in the zoom projection lens 120 is displaced. The Hall element detects the rotation of the gear structure based on the Hall effect to generate a corresponding detection value. Therefore, the gear structure combined with the Hall element may make the detection module 160 generate a binary digitally encoded detection value. In yet another embodiment, the detection module 160 may be a stepper motor driver, and is configured to generate the movement steps for the stepper motor corresponding thereto (i.e., the corresponding detection value) as the lens group in the zoom projection lens 120 moves. Compared with the above-mentioned other embodiments, the detection module 160 in this embodiment does not need to use an additional mechanical structure (e.g., a gear structure), and the detection module 160 and the second driving device of the zoom-ratio adjustment module 150 in this embodiment may be the same device to save the production cost of the projection device 100.

In step S230, the control unit 170 may calculate the number of focus adjustment steps of the first driving device of the focus adjustment module 140 through the autofocus transfer function stored in the projection device 100, and then provide a control signal corresponding to the number of focus adjustment steps to the focus adjustment module 140, causing the focus adjustment module 140 to adjust the imaging focal length of the zoom projection lens 120 to perform autofocusing.

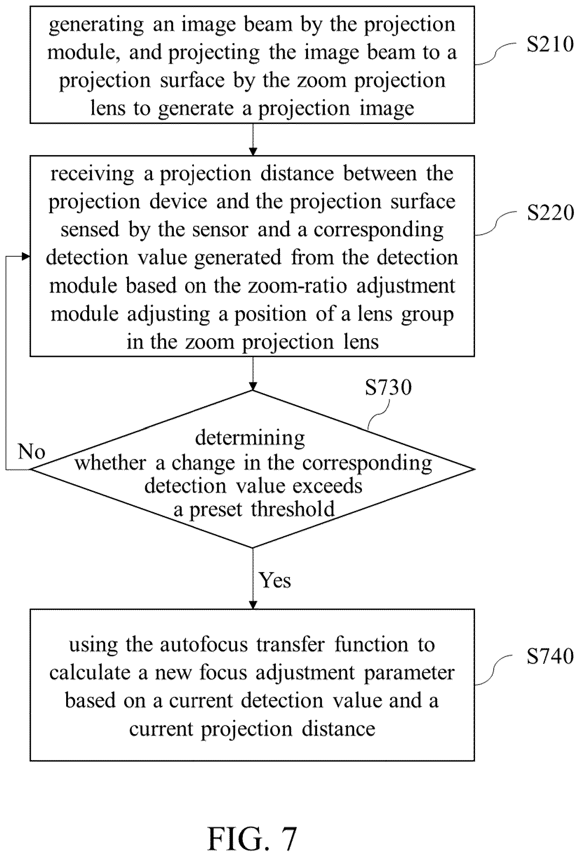

In order to avoid frequent autofocusing, which may cause system instability, please refer to FIG. 1 and FIG. 7. FIG. 7 is a flow chart of a projection correction method according to another embodiment of the present invention. The projection correction method of FIG. 7 may be at least applicable to the projection device 100 of FIG. 1, and the details of each step in FIG. 7 are illustrated below with the components shown in FIG. 1. As shown in FIG. 7, in addition to step S210 and step S220, the projection correction method may further include the following steps: determining whether a change in the corresponding detection value exceeds a preset threshold (step S730); using the autofocus transfer function to calculate a new focus adjustment parameter based on a current detection value and a current projection distance when the change in the corresponding detection value exceeds the preset threshold (step S740); and executing step S220 again when the change in the corresponding detection value does not exceed the preset threshold, wherein step S730 and step S740 are executed by the control unit 170.

In one embodiment, the autofocus transfer function is: $FP = Z_{wc} \times G_{st} + d_{fp} + a\prod_{k=1}^{g(Dist)}(1 + Lc_1 Lc_2^{k-1})$, $FP$ is the focus adjustment parameter (that is, during auto-focusing, the first driving device of the focus adjustment module 140 needs to adjust the number of steps accordingly), $Z_{wc}$ is a zoom-ratio parameter of the zoom projection lens 120, the zoom-ratio parameter is related to the corresponding detection value, $G_{st}$ is

a parameter indicating a total number of steps of a motor stroke of the focus adjustment module 140 (that is, the total number of steps of the first driving device of the focus adjustment module 140), $d_{fp}$ is a focus deviation of the projection device 100, $a$ is a minimum imaging object distance of the zoom projection lens $120$, $g(Dist)$ is a projection distance transfer parameter, $Lc_1$ and $Lc_2$ are the lens parameters of the zoom projection lens 120 and are respectively related to a curvature of an incident surface and a curvature of an exit surface of the zoom projection lens 120. $G_{st}$ is related to the design of the zoom projection lens 120, and the same set of values is applicable to the zoom projection lens 120 of the same specifications. $Lc_1$ and $Lc_2$ are related to the design of the zoom projection lens 120, the same set of values is applicable to the zoom projection lens 120 of the same specifications, and $Lc_1$ and $Lc_2$ are fixed parameter values stored in advance and corresponding to each zoom projection lens 120.

In one embodiment, the projection distance transfer parameter $g(Dist)$ is obtained by the following formula:

$$g(Dist) = \frac{Dist - Dist_{min}}{Dist_{interval}}$$

, where $Dist$ is the projection distance d (that is, the projection distance d between the projection device 100 and the projection surface PS sensed by the sensor 130), $Dist_{min}$ is a minimum projection distance of the projection device 100 (i.e., the minimum imaging object distance of the zoom projection lens 120), $Dist_{interval}$ is a calculation precision parameter of the focus adjustment module 140. Among them, $Dist_{interval}$ is the distance interval value corresponding to the number of steps of the first driving device of the focus adjustment module 140 (e.g., 5 centimeters). When a smaller calculation precision parameter $Dist_{interval}$ is selected, the projection device 100 may obtain a more accurate focus adjustment parameter FP, but the computational burden of the projection device 100 is relatively large. Conversely, when a larger calculation precision parameter $Dist_{interval}$ is selected, the computational burden of the projection device 100 is relatively small, but the accuracy of the focus adjustment parameter FP is relatively low. Therefore, the magnitude of the calculation precision parameter $Dist_{interval}$ may be determined by the computational capability of the projection device 100. In addition, in the projection distance transfer parameter $g(Dist)$, since a short-distance sensing error is greater than a long-distance sensing error, the minimum projection distance of the projection device 100 is selected as the reference point for calculating the distance, so that the corrected system has a smaller error. However, in order to ensure clear focus at the minimum projection distance, it is preferable to select the minimum projection distance $Dist_{min}$ in the projection distance transfer parameter $g(Dist)$ as the reference point for calculating the distance.

In one embodiment, the zoom-ratio parameter $Z_{wc}$ of the zoom projection lens 120 is obtained by the following formula:

$$Z_{wc} = \frac{Zoom_{current} - Zoom_{min}}{Zoom_{max} - Zoom_{min}}$$

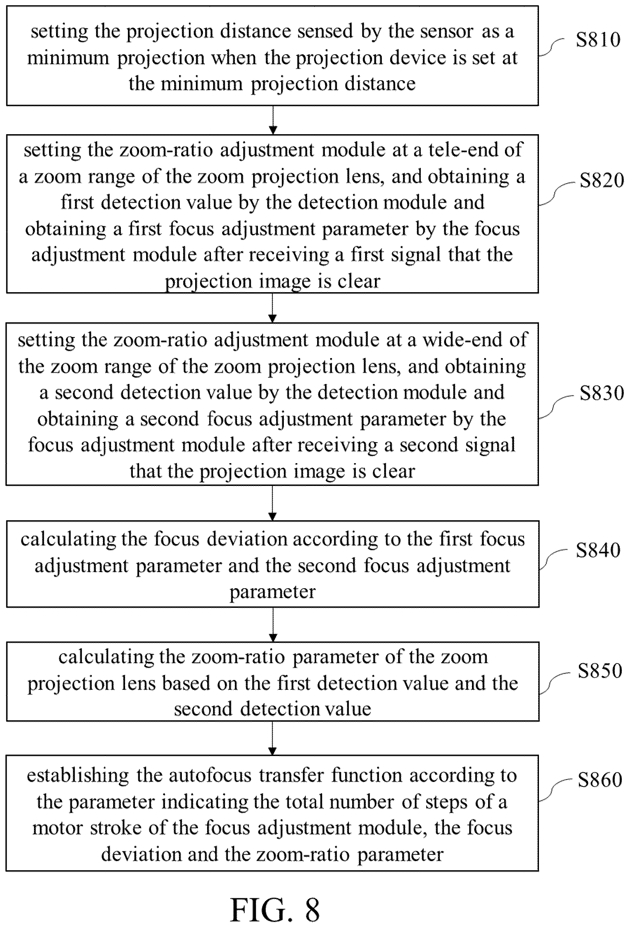

, $Zoom_{current}$ is a current detection value, $Zoom_{min}$ is the first detection value, and $Zoom_{max}$ is the second detection value. Among them, $Zoom_{min}$ and $Zoom_{max}$ may be obtained in the process of establishing the autofocus transfer function in FIG. 8.

Please refer to FIG. 8, which is a flow chart for establishing the autofocus transfer function in FIG. 2 and FIG. 7. As shown in FIG. 8, The method for obtaining the autofocus transfer function in the projection correction method includes the following steps: setting the projection distance d sensed by the sensor as a minimum projection distance $Dist_{min}$ when the projection device is set at the minimum projection distance $Dist_{min}$ (step S810); setting the zoom-ratio adjustment module 150 at a tele-end of a zoom range of the zoom projection lens 120, and obtaining a first detection value $Zoom_{min}$ by the detection module 160 and obtaining a first focus adjustment parameter by the focus adjustment module 140 after receiving a first signal that the projection image is clear (step S820); setting the zoom-ratio adjustment module 150 at a wide-end of the zoom range of the zoom projection lens 120, and obtaining a second detection value $Zoom_{max}$ by the detection module 160 and obtaining a second focus adjustment parameter by the focus adjustment module 140 after receiving a second signal that the projection image is clear (step S830); calculating the focus deviation $d_{fp}$ according to the first focus adjustment parameter and the second focus adjustment parameter (step S840); calculating the zoom-ratio parameter $Z_{wc}$ of the zoom projection lens 120 based on the first detection value $Zoom_{min}$ and the second detection value $Zoom_{min}$ (step S850); and establishing the autofocus transfer function according to the parameter $G_{st}$ indicating the total number of steps of a motor stroke of the focus adjustment module 140, the focus deviation $d_{fp}$ and the zoom-ratio parameter $Z_{wc}$ (step S860), wherein step S810 to step S860 are executed by the control unit 170 before the projection device 100 leaves the factory. Therefore, it may be known that the first detection value $Zoom_{min}$, the second detection value $Zoom_{max}$, the parameter $G_{st}$ indicating the total number of steps of a motor stroke of the focus adjustment module 140 and the focus deviation $d_{fp}$ are the default values stored in advance before the projection device 100 leaves the factory.

Step S820 includes: using human eyes to determine whether the current projection image is in focus by a verifier before the projection device 100 leaves the factory when the zoom-ratio adjustment module 150 is set at the tele-end of the zoom range of the zoom projection lens 120; if not, the verifier operating the focus adjustment module 140 of the projection device 100 to adjust the projection image to be in the clearest focus (for example, the verifier uses the on-screen display (OSD) or the external remote-control device to control the rotation direction of the focus adjustment module 140 to adjust the projection image to be in the clearest focus); if yes, using the on-screen display or the external remote-control device to output a first signal to the control unit 170 to make the control unit 170 obtain the first detection value $Zoom_{min}$ through the detection module 160 and obtain the first focus adjustment parameter through the focus adjustment module 140. That is, the control unit 170 calculates the first focus adjustment parameter based on the action of the verifier operating the focus adjustment module 140. For example, if the verifier presses the right button of the external remote-control device once, which increases the adjustment movement of the first driving device of the focus adjustment module 140 by 5 steps, thereby increasing the first focus adjustment parameter by 5; if the verifier presses the left button of the external remote-control device once, which decreases the adjustment movement of the first driving device of the focus adjustment module 140 by 5 steps, thereby decreasing the first focus adjustment parameter by 5.

Step S830 includes: using human eyes to determine whether the current projection image is in focus by a verifier before the projection device 100 leaves the factory when the projection device 100 is maintained at the minimum projection distance $Dist_{min}$ and the zoom-ratio adjustment module 150 is set at the tele-end of the zoom range of the zoom projection lens 120; if not, the verifier operating the focus adjustment module 140 of the projection device 100 to adjust the projection image to be in the clearest focus (for example, the verifier uses the on-screen display or the external remote-control device to control the rotation direction of the focus adjustment module 140 to adjust the projection image to be in the clearest focus); if yes, the verifier using the on-screen display or the external remote-control device to output a second signal to the control unit 170 to make the control unit 170 obtain the second detection value $Zoom_{max}$ through the detection module 160 and obtain the second focus adjustment parameter through the focus adjustment module 140. That is, the control unit 170 calculates the second focus adjustment parameter based on the action of the verifier operating the focus adjustment module 140. For example, if the verifier presses the right button of the external remote-control device once, which increases the adjustment movement of the first driving device of the focus adjustment module 140 by 5 steps, thereby increasing the second focus adjustment parameter by 5; if the verifier presses the left button of the external remote-control device once, which decreases the adjustment movement of the first driving device of the focus adjustment module 140 by 5 steps, thereby decreasing the second focus adjustment parameter by 5.

In step S840, the control unit 170 may use the autofocus transfer function to calculate the focus deviation $d_{fp}$ according to the lens parameters of the zoom projection lens 120 (i.e., $Lc_1$ and $Lc_2$), the projection distance d, the first detection value $Zoom_{min}$, the second detection value $Zoom_{max}$, the first focus adjustment parameter and the second focus adjustment parameter.

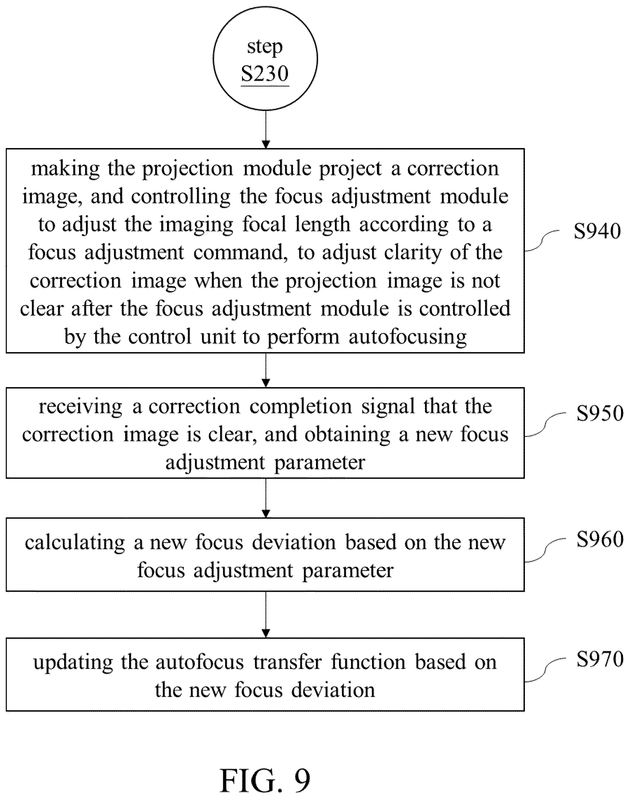

Please refer to FIG. 1 and FIG. 9, and FIG. 9 is a flow chart of a projection correction method according to still another embodiment of the present invention. The projection correction method of FIG. 9 may be at least applicable to the projection device 100 of FIG. 1, and the details of each step in FIG. 9 are illustrated below with the components shown in FIG. 1. As shown in FIG. 9, in addition to step S210 to step S230 in FIG. 2, the projection correction method may further include the following steps: making the projection module 110 project a correction image (the correction image may include, for example, a correction pattern) and controlling the focus adjustment module 140 to adjust the imaging focal length according to a focus adjustment command, to adjust clarity of the correction image when the projection image is not clear after the focus adjustment module 140 is controlled by the control unit 170 to perform automatic focusing (step S940); receiving a correction completion signal that the correction image is clear, and obtaining a new focus adjustment parameter (step S950); calculating a new focus deviation $d_{fp}'$ based on the new focus adjustment parameter (step S960); and updating the autofocus transfer function based on the new focus deviation $d_{fp}'$ (step S970), wherein step S940 to step S970 may be referred to as an autofocus correction procedure. To avoid making the drawing of FIG9 too complicated, step S210 and step S220 are omitted in FIG. 9. In addition, step S940 to step S970 in FIG. 9 may also be applied to the projection correction method in FIG. 7, and the order of step S940 to step S970 may be adjusted according to actual needs.

In step S940, after the control unit 170 controls the focus adjustment module 140 to perform autofocusing, the user determines through human eyes that the projection image is not in focus at this time, which means that the autofocus transfer function stored in the projection device 100 (i.e., the autofocus transfer function established in FIG. 7) is not applicable due to the assembly tolerance between the zoom projection lens 120 and the focus adjustment module 140 or the projection device 100 hit by an external force. Therefore, the user may use the screen display control or the buttons of the external remote-control device to output a correction signal to the control unit 170 to make the control unit 170 control the projection module 110 to project the correction image, and then use the screen display control or the buttons of the external remote-control device to output the focus adjustment command to the control unit 170 to make the control unit 170 control the focus adjustment module 140 to adjust the imaging focal length to correct the correction image until it is clear.

In step S950, when the user determines that the correction image is clear, the correction completion signal is output to the control unit 170 through the screen display control or the buttons of the external remote-control device to make the control unit 170 calculate the new focus adjustment parameter based on the adjustment of the focus adjustment module 140 in step S940. In step S960, the control unit 170 calculates a new focus deviation $d_{fp}'$ based on the new focus adjustment parameter. For example, the user presses the right button of the external remote-control device once, which increases the adjustment movement of the first driving device of the focus adjustment module 140 by 5 steps, thereby increasing the focus deviation by 1; the user presses the left button of the external remote-control device once, which decreases the adjustment movement of the first driving device of the focus adjustment module 140 by 5 steps, thereby decreasing the focus deviation by 1; when the original focus deviation $d_{fp}$ is 100, and the user presses the right button of the external remote-control device five times to make the correction image clear, the new focus deviation $d_{fp}$' is 105. In step S970, the control unit 170 updates the autofocus transfer function stored in the projection device 100 according to the new focus deviation number $d_{fp}$' (i.e., the control unit 170 updates the focus deviation $d_{fp}$ in the autofocus transfer function to the new focus deviation $d_{fp}$').

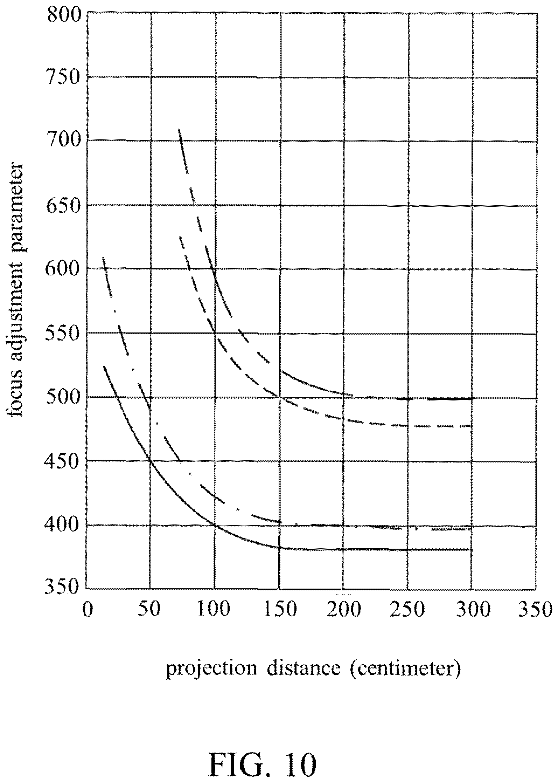

Please refer to FIG. 10, which is a graph of the default autofocus transfer function and the corrected autofocus transfer function. In FIG. 10, the horizontal axis is the projection distance in centimeter (cm), the vertical axis is the focus adjustment parameter (i.e., the number of motor steps), the solid line and the one-dot chain line are the default autofocus transfer function for the tele-end and wide-end respectively, the coverage range between the solid line and the one-dot chain line is the range supported by the default autofocus transfer function; the dotted line and the two-dot chain line are the corrected autofocus transfer function for the tele-end and wide-end respectively, the coverage range between the dotted line and the two-dot chain line is the range supported by the corrected autofocus transfer function. As shown in FIG. 10, after the projection device 100 performs a fine-tuning correction at any supported projection distance and with any supported zoom ratio, the corrected autofocus transfer function may provide the best autofocus effect for projection imaging at the tele-end or the wide-end.

Based on the above, when the autofocus effect of the projection device 100 is not good, the projection device 100 may correct the error through the autofocus correction procedure and establish the corrected autofocus transfer function, so that the projection device 100 may be restored to have a good focus effect under any supported zoom ratio within the effective projection distance after there is an assembly tolerance between the zoom projection lens 120 and the focus adjustment module 140 or the projection device 100 is hit by an external force. Therefore, the projection device 100 may provide users with a better experience. In addition, step S940 to step S970 may be executed at any supported projection distance and with any supported zoom ratio, and only one fine-tuning of the focus correction is required to make the projection image clear by using the judgment of human eyes.

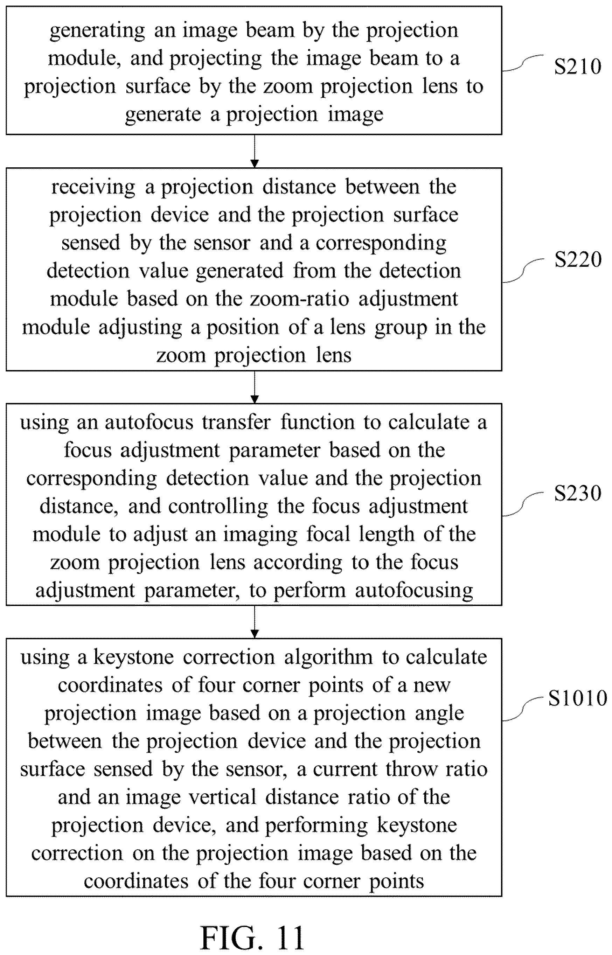

Please refer to FIG. 1 and FIG. 11. FIG. 11 is a flow chart of a projection correction method according to yet another embodiment of the present invention. The projection correction method of FIG. 11 may be at least applicable to the projection device 100 of FIG. 1, and the details of each step in FIG. 11 are illustrated below with the components shown in FIG. 1. As shown in FIG. 11, in addition to step S210 to step S230 in FIG. 2, the projection correction method may further include the following steps: using a keystone correction algorithm to calculate coordinates of four corner points of a new projection image based on a projection angle between the projection device 100 and the projection surface PS sensed by the sensor 130, a current throw ratio and an image vertical distance ratio of the projection device 100, and performing keystone correction on the projection image based on the coordinates of the four corner points (step S1010). In addition, step S1010 in FIG. 11 may also be applied to the projection correction method in FIG. 7 and/or FIG. 9, and the order of step S1010 may be adjusted according to actual needs.

Among them, step S1010 is executed by the control unit 170. The current throw ratio is obtained by the following

$$TR_{current} = \frac{TR_{Tele}}{(1 + R \times Z_{wc})}$$

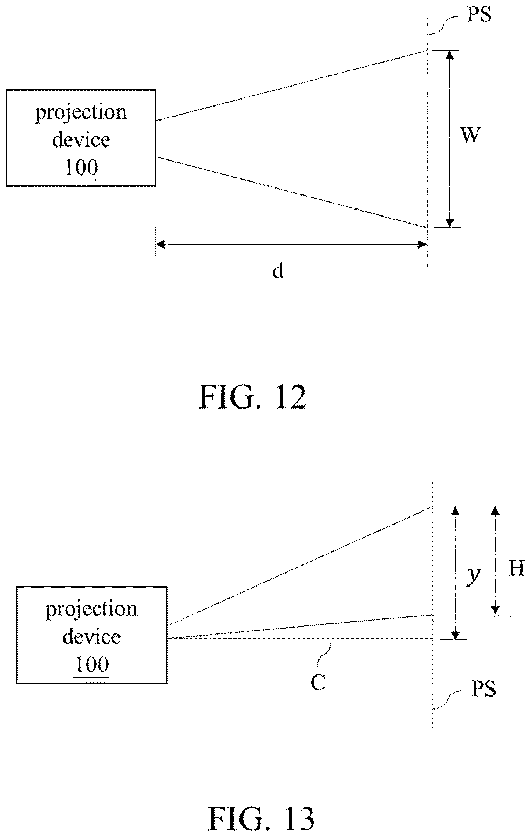

formula: , $TR_{current}$ is the current throw ratio, $TR_{Tele}$ is a throw ratio of a tele-end of a zoom range of the zoom projection lens 120, R is a ratio difference between the tele-end of the zoom range and a wide-end of the zoom range of the zoom projection lens 120, and $Z_{wc}$ is a zoom-ratio parameter of the zoom projection lens 20, which is related to the corresponding detection value. The throw ratio is the ratio of the projection distance d to the width W of the projection image (please refer to FIG. 12, which is a top view of the projection image projected by the projection device according to a present embodiment). The image vertical distance ratio of the projection device 100 is obtained by the

$$VO = \left(\frac{2 \times y}{H}\right) - 1$$

following formula: , $VO$ is the image vertical distance ratio, $H$ is the height of the projection image, y is a distance between the position of the projection surface PS corresponding to the optical axis C of the zoom projection lens 120 and the top edge of the projection image (please refer to FIG. 13, which is a side view of a projection image projected by the projection device according to a present embodiment).

Since the projection device 100 is a projection device with a variable throw ratio. As the zoom ratio is adjusted, the throw ratio of the projection device 100 changes accordingly, so the parameter of keystone correction also needs to change as the zoom-ratio parameter $Z_{wc}$ of the zoom projection lens 120 is adjusted. Therefore, the control unit 170 obtains the current throw ratio and the image vertical distance ratio according to the projection angle and the zoom-ratio parameter $Z_{wc}$, calculates the coordinates of the four corner points of the new projection image using a keystone correction algorithm, and moves the coordinates of the four corner points of the projection image without keystone correction to the coordinates of the four corner points of the new projection image to perform keystone correction on the projection image. The details of the keystone correction algorithm are well known to those skilled in the art and will not be described in detail.

To sum up, the projection device and the projection correction method according to the embodiments of the present invention have at least one of the following advantages. The focus adjustment parameter is calculated using the autofocus transfer function according to the projection distance between the projection device and the projection surface and the corresponding detection value generated by adjusting the position of the lens group in the zoom projection lens, and then the focus adjustment parameter is used to adjust the imaging focal length of the zoom projection lens for autofocusing, so as to achieve a good focus effect at any zoom ratio supported by the projection device within the effective projection distance. In addition, under the condition that the zoom projection lens is fixed at any zoom ratio within the effective projection distance of the projection device, only one fine-tuning of the focus correction is required to make the projection image clear by using the judgment of human eyes of the user, and make the projection device 100 restored to have a good focus effect under any supported zoom ratio within the effective projection distance after there is an assembly tolerance between the zoom projection lens 120 and the focus adjustment module 140 or the projection device 100 is hit by an external force. Moreover, the current throw ratio and the image vertical distance ratio are obtained according to the zoom-ratio parameter and the projection angle, the coordinates of the four corner points of the new projection image are calculated using the keystone correction algorithm, and the coordinates of the four corner points of the original projection image are moved to the coordinates of the four corner points of the new projection image, thereby correcting the projection image into a rectangle image with the correct proportion, solving the problem that the existing keystone correction method may only perform keystone correction under the conditions of fixed throw ratio and image vertical distance ratio and variable projection distance, and may not support keystone correction after the throw ratio changes.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

**Claims**

1.    A projection device comprising:

a projection module (110) configured to generate an image beam (IB);
a zoom projection lens (120) disposed on a transmission path of the image beam (IB) and configured to project the image beam (IB) to a projection surface (PS) to generate a projection image;
a sensor (130) configured to sense a projection distance between the projection device and the projection surface (PS);
a focus adjustment module (140) connected to the zoom projection lens (120) and configured to rotate the zoom projection lens (120) to adjust an imaging focal length of the zoom projection lens (120);
a zoom-ratio adjustment module (150) connected to the zoom projection lens (120) and configured to adjust a position of a lens group in the zoom projection lens (120) to adjust a zoom ratio of the projection image;
a detection module (160) connected to the zoom projection lens (120) and configured to generate a corresponding detection value according to a displacement variation of the lens group; and
a control unit (170) connected to the detection module (160), the sensor (130) and the focus adjustment module (140) and configured to use an autofocus transfer function to calculate a focus adjustment parameter based on the corresponding detection value and the projection distance, and control the focus adjustment module (140) to adjust the imaging focal length of the zoom projection lens (120) according to the focus adjustment parameter, to perform autofocusing.

2. The projection device according to claim 1, wherein the autofocus transfer function is

$$FP = Z_{wc} \times G_{st} + d_{fp} + a \prod_{k=1}^{g(Dist)}(1 + Lc_1 Lc_2^{k-1})$$

, $FP$ is the focus adjustment parameter, $Z_{wc}$ is a zoom-ratio parameter of the zoom projection lens (120), the zoom-ratio parameter is related to the corresponding detection value, $G_{st}$ is a parameter indicating a total number of steps of a motor stroke of the focus adjustment module (140), $d_{fp}$ is a focus deviation of the projection device, $a$ is a minimum imaging object distance of the zoom projection lens (120), $g(Dist)$ is a projection distance transfer parameter, and $Lc_1$ and $Lc_2$ are lens parameters of the zoom projection lens (120) and are respectively related to a curvature of an incident surface and a curvature of an exit surface of the zoom projection lens (120).

3. The projection device according to claim 1 or 2, wherein when the projection device is set at a minimum projection distance, the control unit (170) is configured to:

   set the projection distance sensed by the sensor as the minimum projection distance;
   set the zoom-ratio adjustment module (150) at a tele-end of a zoom range of the zoom projection lens (120), and obtain a first detection value by the detection module (160) and obtain a first focus adjustment parameter by the focus adjustment module (140) after receiving a first signal that the projection image is clear;
   set the zoom-ratio adjustment module at a wide-end of the zoom range of the zoom projection lens (120), and obtain a second detection value by the detection module (160) and obtain a second focus adjustment parameter by the focus adjustment module (140) after receiving a second signal that the projection image is clear; and calculate the focus deviation according to the first focus adjustment parameter and the second focus adjustment parameter.

4. The projection device according to claim 2 or 3, wherein the zoom-ratio parameter of the zoom projection lens (120) is obtained by the following formula: $Z_{wc} = \dfrac{Zoom_{current} - Zoom_{min}}{Zoom_{max} - Zoom_{min}}$ , $Zoom_{current}$ is a current detection value, $Zoom_{min}$ is the first detection value, and $Zoom_{max}$ is the second detection value.

5. The projection device according to claim 3 or 4 , wherein the projection distance transfer parameter is obtained by the following formula: $g(Dist) = \dfrac{Dist - Dist_{min}}{Dist_{interval}}$ , $Dist$ is the projection distance, $Dist_{min}$ is a minimum projection distance of the projection device, and $Dist_{interval}$ is a calculation precision parameter of the focus adjustment module (140).

6. The projection device according to any one of the preceding claims, wherein when the projection image is not clear after the control unit (170) controls the focus adjustment module (140) to perform autofocusing, the control unit (170) is further configured to:

   make the projection module (110) project a correction image, and control the focus adjustment module (140) to adjust the imaging focal length according to a focus adjustment command, to adjust clarity of the correction image;
   receive a correction completion signal that the correction image is clear, and obtain a new focus adjustment parameter; and
   calculate a new focus deviation based on the new focus adjustment parameter; and to update the autofocus transfer function based on the new focus deviation.

7. The projection device according to any one of the preceding claims, wherein the sensor (130) is further configured to sense a projection angle between the projection device (100) and the projection surface (PS).

8. The projection device according to claim 7, wherein the control unit (170) is configured to use a keystone correction algorithm to calculate coordinates of four corner points of a new projection image based on the projection angle, a current throw ratio and an image vertical distance ratio of the projection device, and perform keystone correction on the projection image based on the coordinates of the four corner points; the current throw ratio is obtained by the following formula: $TR_{current} = \dfrac{TR_{Tele}}{(1 + R \times Z_{wc})}$ , $TR_{current}$ is the current throw ratio, $TR_{Tele}$ is a throw ratio of a tele-end of a zoom range of the zoom projection lens, R is a ratio difference between the tele-end of the zoom range and a wide-end of the zoom range of the zoom projection lens, and $Z_{wc}$ is a zoom-ratio parameter of the zoom projection lens (120), which is related to the corresponding detection value.

9. The projection device according to any one of the preceding claims, wherein when the control unit (170) determines that a change in the corresponding detection value exceeds a preset threshold, the control unit (170) is configured to use the autofocus transfer function to calculate a new focus adjustment parameter based on a current detection value and a current projection distance.

10. The projection device according to any one of the preceding claims, wherein the sensor (130) comprises at least one of a laser sensing unit, an infrared sensing unit and an ultrasonic sensing unit.

11. The projection device according to any one of the preceding claims, wherein the detection module (160) comprises a control rod (70) and a detection assembly (80), the detection assembly (80) is connected to the control rod (70), the zoom-ratio adjustment module (140) comprises a zoom adjustment ring (60), the control rod (70) is inserted into an opening (62) of the zoom adjustment ring (60); when the zoom-ratio adjustment module (140) adjusts the zoom ratio, the zoom adjustment ring (60) rotates to drive the control rod (70) to generate displacement, and the detection assembly (80) is configured to detect a change in an electrical signal value according to the displacement of the control rod (70), and generate the corresponding detection value, preferably an extension direction of the control rod (70) is substantially parallel to an optical axis of the zoom projection lens (120).

12. The projection device according to claim 11, wherein a size of the opening (62) of the zoom adjustment ring (60) is greater than a size of the control rod (70).

13. A projection correction method suitable for a projection device (100), the projection device (100) comprising a projection module (110), a zoom projection lens (120), a sensor (130), a focus adjustment module (140), a zoom-ratio adjustment module (150) and a detection module (160), the zoom-ratio adjustment module (140) and the detection module (160) being connected to the zoom projection lens (120), and the projection correction method comprising the following steps:

generating an image beam (IB) by the projection module (110), and projecting the image beam (IB) to a projection surface (PS) by the zoom projection lens (120) to generate a projection image;
receiving a projection distance between the projection device (100) and the projection surface (PS) sensed by the sensor (130) and a corresponding detection value generated from the detection module (160) based on the zoom-ratio adjustment module (150) adjusting a position of a lens group in the zoom projection lens (120); and
using an autofocus transfer function to calculate a focus adjustment parameter based on the corresponding detection value and the projection distance, and controlling the focus adjustment module (140) to adjust an imaging focal length of the zoom projection lens (120) according to the focus adjustment parameter, to perform autofocusing.

14. The projection correction method according to claim 13, further comprising the following steps:

setting the projection distance sensed by the sensor (130) as a minimum projection distance when the projection device (100) is set at the minimum projection distance;
setting the zoom-ratio adjustment module (150) at a tele-end of a zoom range of the zoom projection lens (120), and obtaining a first detection value by the detection module (160) and obtaining a first focus adjustment parameter by the focus adjustment module (140) after receiving a first signal that the projection image is clear;
setting the zoom-ratio adjustment module (150) at a wide-end of the zoom range of the zoom projection lens (120), and obtaining a second detection value by the detection module (160) and obtaining a second focus adjustment parameter by the focus adjustment module after receiving a second signal that the projection image is clear; and
calculating the focus deviation according to the first focus adjustment parameter and the second focus adjustment parameter.

15. The projection correction method according to claim 14, further comprising the following steps:

making the projection module (110) project a correction image and controlling the focus adjustment module (140) to adjust the imaging focal length according to a focus adjustment command, to adjust clarity of the correction image when the projection image is not clear after the focus adjustment module (140) is controlled to perform automatic focusing;

receiving a correction completion signal that the correction image is clear, and obtaining a new focus adjustment parameter;

calculating a new focus deviation based on the new focus adjustment parameter; and

updating the autofocus transfer function based on the new focus deviation.

FIG. 1

generating an image beam by the projection module, and projecting the image beam to a projection surface by the zoom projection lens to generate a projection image — S210

receiving a projection distance between the projection device and the projection surface sensed by the sensor and a corresponding detection value generated from the detection module based on the zoom-ratio adjustment module adjusting a position of a lens group in the zoom projection lens — S220

using an autofocus transfer function to calculate a focus adjustment parameter based on the corresponding detection value and the projection distance, and controlling the focus adjustment module to adjust an imaging focal length of the zoom projection lens according to the focus adjustment parameter, to perform autofocusing — S230

FIG. 2

FIG. 3

EP 4 625 039 A1

FIG. 4

FIG. 5

100

62

70

60

E

Q

Z

X

Y

FIG. 6

generating an image beam by the projection module, and projecting the image beam to a projection surface by the zoom projection lens to generate a projection image — S210

receiving a projection distance between the projection device and the projection surface sensed by the sensor and a corresponding detection value generated from the detection module based on the zoom-ratio adjustment module adjusting a position of a lens group in the zoom projection lens — S220

S730

determining whether a change in the corresponding detection value exceeds a preset threshold

No

Yes

using the autofocus transfer function to calculate a new focus adjustment parameter based on a current detection value and a current projection distance — S740

FIG. 7

setting the projection distance sensed by the sensor as a minimum projection when the projection device is set at the minimum projection distance ⟋ S810

setting the zoom-ratio adjustment module at a tele-end of a zoom range of the zoom projection lens, and obtaining a first detection value by the detection module and obtaining a first focus adjustment parameter by the focus adjustment module after receiving a first signal that the projection image is clear ⟋ S820

setting the zoom-ratio adjustment module at a wide-end of the zoom range of the zoom projection lens, and obtaining a second detection value by the detection module and obtaining a second focus adjustment parameter by the focus adjustment module after receiving a second signal that the projection image is clear ⟋ S830

calculating the focus deviation according to the first focus adjustment parameter and the second focus adjustment parameter ⟋ S840

calculating the zoom-ratio parameter of the zoom projection lens based on the first detection value and the second detection value ⟋ S850

establishing the autofocus transfer function according to the parameter indicating the total number of steps of a motor stroke of the focus adjustment module, the focus deviation and the zoom-ratio parameter ⟋ S860

# FIG. 8

step
S230

making the projection module project a correction image, and controlling the focus adjustment module to adjust the imaging focal length according to a focus adjustment command, to adjust clarity of the correction image when the projection image is not clear after the focus adjustment module is controlled by the control unit to perform autofocusing ⌐ S940

receiving a correction completion signal that the correction image is clear, and obtaining a new focus adjustment parameter ⌐ S950

calculating a new focus deviation based on the new focus adjustment parameter ⌐ S960

updating the autofocus transfer function based on the new focus deviation ⌐ S970

FIG. 9

FIG. 10

generating an image beam by the projection module, and projecting the image beam to a projection surface by the zoom projection lens to generate a projection image

S210

receiving a projection distance between the projection device and the projection surface sensed by the sensor and a corresponding detection value generated from the detection module based on the zoom-ratio adjustment module adjusting a position of a lens group in the zoom projection lens

S220

using an autofocus transfer function to calculate a focus adjustment parameter based on the corresponding detection value and the projection distance, and controlling the focus adjustment module to adjust an imaging focal length of the zoom projection lens according to the focus adjustment parameter, to perform autofocusing

S230

using a keystone correction algorithm to calculate coordinates of four corner points of a new projection image based on a projection angle between the projection device and the projection surface sensed by the sensor, a current throw ratio and an image vertical distance ratio of the projection device, and performing keystone correction on the projection image based on the coordinates of the four corner points

S1010

FIG. 11

FIG. 12

FIG. 13

Europäisches Patentamt
European Patent Office
Office européen des brevets

# EUROPEAN SEARCH REPORT

**Application Number**

EP 25 16 2199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/154634 A1 (NEC DISPLAY SOLUTIONS LTD [JP]) 30 August 2018 (2018-08-30) | 1,7-9,13 | INV. G03B21/53 |
| Y | * paragraphs [0014] - [0037], [0059]; figures 1,2,4 * | 2-6, 10-12, 14,15 | G03B3/10 G03B21/14 G02B7/28 H04N9/31 |
| Y | US 2007/046902 A1 (YAJIMA KENICHI [JP]) 1 March 2007 (2007-03-01) * paragraphs [0017] - [0028], [0034]; figure 1 * | 1,2,4,5, 7-13 | |
| Y | US 10 146 975 B2 (DATALOGIC IP TECH SRL [IT]) 4 December 2018 (2018-12-04) * column 5, lines 44-50 * | 1,2, 4-13,15 | |
| Y | US 5 422 699 A (SATO SHIGEMASA [JP] ET AL) 6 June 1995 (1995-06-06) * column 4, lines 3-22 * * column 13, line 49 - column 14, line 2 * | 1,2,4,5, 7-13 | |
| Y | US 9 116 299 B2 (CANON KK [JP]) 25 August 2015 (2015-08-25) * column 4, line 65 - column 5, line 7; figure 4 * | 1-5,7-14 | **TECHNICAL FIELDS SEARCHED (IPC)** G03B H04N G02B |

The present search report has been drawn up for all claims

| Place of search | Date of completion of the search | Examiner |
|---|---|---|
| Munich | 15 July 2025 | Rückerl, Ralph |

EPO FORM 1503 03.82 (P04C01)

# EP 4 625 039 A1

## ANNEX TO THE EUROPEAN SEARCH REPORT
## ON EUROPEAN PATENT APPLICATION NO.

EP 25 16 2199

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2025

| Patent document cited in search report | | Publication date | Patent family member(s) | | Publication date |
|---|---|---|---|---|---|
| WO 2018154634 | A1 | 30-08-2018 | JP | 6804056 B2 | 23-12-2020 |
| | | | JP | WO2018154634 A1 | 23-01-2020 |
| | | | WO | 2018154634 A1 | 30-08-2018 |
| US 2007046902 | A1 | 01-03-2007 | CN | 1924693 A | 07-03-2007 |
| | | | JP | 2007067495 A | 15-03-2007 |
| | | | US | 2007046902 A1 | 01-03-2007 |
| US 10146975 | B2 | 04-12-2018 | EP | 3542303 A1 | 25-09-2019 |
| | | | US | 2018137318 A1 | 17-05-2018 |
| | | | US | 2019073503 A1 | 07-03-2019 |
| | | | WO | 2018092026 A1 | 24-05-2018 |
| US 5422699 | A | 06-06-1995 | JP | H05210039 A | 20-08-1993 |
| | | | US | 5422699 A | 06-06-1995 |
| US 9116299 | B2 | 25-08-2015 | JP | 6034701 B2 | 30-11-2016 |
| | | | JP | 2014134698 A | 24-07-2014 |
| | | | US | 2014198247 A1 | 17-07-2014 |

EPO FORM P0459

For more details about this annex : see Official Journal of the European Patent Office, No. 12/82

28

**EP 4 625 039 A1**

## REFERENCES CITED IN THE DESCRIPTION

**Patent documents cited in the description**

- US 63570829

- CN 2024108136639